# EUROPÄISCHE PATENTSCHRIFT

(11) **EP 2 599 213 B1**
(45) Veröffentlichungstag und Bekanntmachung des Hinweises auf die Patenterteilung: **02.04.2014**
(21) Anmeldenummer: 11730646.4
(22) Anmeldetag: 07.07.2011
(51) Int. Cl.: H02P 9/10, H02P 9/00

(54) **UMRICHTERSYSTEM SOWIE VERFAHREN ZUM BETRIEB EINES SOLCHEN UMRICHTERSYSTEMS**
CONVERTER SYSTEM AND METHOD FOR OPERATING SUCH A CONVERTER SYSTEM
SYSTÈME CONVERTISSEUR ET PROCÉDÉ DE FONCTIONNEMENT D'UN SYSTÈME CONVERTISSEUR DE CE TYPE

(30) Priorität: 27.07.2010 EP 10170860
(43) Veröffentlichungstag der Anmeldung: 05.06.2013
(73) Patentinhaber: ABB Technology AG, 8050 Zürich (CH)
(72) Erfinder: OEDEGARD, Bjoern, CH-5300 Turgi (CH); SCHAUB, Christoph, CH-5400 Baden (CH); HILLBERG, Claes, CH-4313 Möhlin (CH); AUBERT, Steve, CH-8304 Wallisellen (CH)
(74) Vertreter: ABB Patent Attorneys
(86) Internationale Anmeldenummer: PCT/EP2011/061482
(87) Internationale Veröffentlichungsnummer: WO 2012/019834

(56) Entgegenhaltungen:
- EP-A2- 0 970 840
- EP-A2- 1 780 856
- WO-A1-03/065567
- WO-A1-2004/091085
- LOPEZ J ET AL: "Ride Through of Wind Turbines With Doubly Fed Induction Generator Under Symmetrical Voltage Dips", IEEE TRANSACTIONS ON INDUSTRIAL ELECTRONICS, IEEE SERVICE CENTER, PISCATAWAY, NJ, USA, Bd. 56, Nr. 10, 1. Oktober 2009 (2009-10-01), Seiten 4246-4254, XP011271528, ISSN: 0278-0046, DOI: DOI:10.1109/TIE.2009.2028447

## Beschreibung

### Technisches Gebiet

Die Erfindung bezieht sich auf das Gebiet der Leistungselektronik. Sie geht aus von einem Umrichtersystem sowie Verfahren zum Betrieb eines solchen Umrichtersystems gemäss dem Oberbegriff der unabhängigen Ansprüche.

### Stand der Technik

Umrichtersysteme werden heute in einer Vielzahl von Anwendungen eingesetzt. Typischerweise umfasst ein Umrichtersystem eine Umrichtereinheit, an deren Gleichspannungsseite ein Gleichspannungskreis verbunden ist. An der Wechselspannungsseite der Umrichtereinheit ist üblicherweise eine elektrisches Wechselspannungsnetz und/oder eine elektrische Last, wie beispielsweise eine rotierende elektrische Maschine oder ein Transformator anschliessbar, wobei jedwede elektrische Last denkbar ist. Darüber hinaus ist an der Wechselspannungsseite je nach Anwendung üblicherweise auch eine Kurzschliesserschaltung angeschlossen. Ein Umrichtersystem der eingangs beschriebenen Art mit einer Kurzschliesserschaltung ist beispielsweise in der US 2005/0281065 A1 und in der US 2007/0291426 A1 gezeigt. Im Falle eines Übersteigens der Stromtragfähigkeit der Umrichtereinheit werden die Schalter der Kurzschliesserschaltung eingeschaltet und die Wechselspannungsseite der Umrichtereinheit über einen Kurzschliesserwiderstand der Kurzschliesserschaltung kurzgeschlossen.

Aufgrund der hohen Anforderungen an die Stromtragfähigkeit bei gleichzeitig geringen Bauteilkosten ist es sinnvoll, als Schalter der Kurzschliesserschaltung Thyristoren einzusetzen, wie dies beispielhaft in der US 2007/0291426 A1 offenbart ist. Jedoch lassen sich Thyristoren nicht aktiv abschalten respektive löschen. Das Abschalten eines Thyristors ist nur im Nulldurchgang des zu führenden Stromes möglich, wodurch aufwendige zusätzliche "Löschschaltungen" notwendig sind.

Doppeltgespeiste Asynchronmaschinen als elektrische Last finden nebst dem Einsatz in klassischen rotierenden Frequenzumformern, vermehrt auch Anwendung in drehzahlvariabeln Pumpspeicherkraftwerken. Mit dem "Unbundling" von Energieerzeugung und Übertragung wird/wurde vielerorts ein Grid Code, eingeführt, in welchem die jeweiligen Anschlussbedingungen an das elektrische Versorgungsnetz definiert werden/sind. Bezüglich des Verhaltens bei Netzstörungen, insbesondere Spannungseinbrüchen, sind teilweise neue, verschärfte Bedingungen zu erfüllen. Die angeschlossenen Kraftwerke und Frequenzumformer-Anlagen sollen während vorübergehenden Spannungseinbrüchen mit dem elektrischen Versorgungsnetz verbunden bleiben und sollen teilweise aktiv spannungsstützend wirken, Dies geschieht durch eine geregelte Einspeisung von Blindstrom gemäss Vorgaben aus dem jeweiligen Grid Code. Umrichtereinheiten, welche verwendet werden um die Rotorwicklung von doppeltgespeisten Asynchronmaschinen mit Wechselstrom zu versorgen, sehen bei Spannungseinbrüchen kurzfristig einen höheren Strom als bei Normalbetrieb. Um die Umrichtereinheit vor Überlastung zu schützen und gleichzeitig die Rotorspannung auf ein für den Rotor der Maschine zulässiges Niveau zu begrenzen werden die vorstehend genannten Kurzschliesserschaltungen mit einer Vielzahl an Thyristoren eingesetzt. Solche Kurschliesserschaltungen schützen Umrichtereinheit und Maschine zuverlässig indem sie im Fehlerfall die Rotorwicklung kurzschliessen. Eine sofortige Rückkehr zu einem von der Umrichtereinheit geregelten normalen Betrieb, sobald der Strom sich auf ein erträgliches Mass reduziert hat, ist mit solchen Kurschliesserschaltungen mit Thyristoren jedoch nicht innerhalb kurzer Zeit möglich.
Weiterer gattungsgemässer Stand der Technik ist in ""Ride through of Wind Turbines with doubly fed Induction Generator under symmetrical Voltage Dips", IEEE Transactions on Industrial Electronics, 2009, in der WO 2004/091085 A1, in der WO 03/065567 A1, in der EP 0 970 840 A2 und in der EP 1 780 856 A2 angegeben.

### Darstellung der Erfindung

Aufgabe der Erfindung ist es deshalb, ein bezüglich des Standes der Technik weiterentwickeltes Umrichtersystem mit einer Thyristoren aufweisende Kurzschliesserschaltung anzugeben, bei welchem sich die Thyristoren der Kurzschliesserschaltung sehr einfach abschalten lassen und welches besonders einfach aufgebaut ist. Desweiteren ist es eine Aufgabe der Erfindung, ein Verfahren anzugeben, mittels welchem sich das Umrichtersystem in besonders einfacher Weise betreiben lässt und die Thyristoren der Kurzschliesserschaltung problemlos, schnell und sicher abgeschaltet werden können.

Diese Aufgaben werden durch die Merkmale der Ansprüche 1 und 2 bzw. der Ansprüche 6 und 7 gelöst. In den abhängigen Ansprüchen sind vorteilhafte Weiterbildungen der Erfindung angegeben.

Umrichtersystem zum Schalten von mindestens drei Spannungsniveaus umfasst eine Umrichtereinheit, an deren Gleichspannungsseite ein Gleichspannungskreis verbunden ist, welcher Gleichspannungskreis einen Spannungsnullpunkt aufweist, und an deren Wechselspannungsseite eine Kurzschliesserschaltung verbunden ist, wobei die Kurzschliesserschaltung eine Vielzahl an Thyristoren und mindestens zwei Kurzschliesserwiderstände aufweist. Der Strom durch die Umrichtereinheit wird auf einen Schwellwert hin überwacht und bei Überschreiten des Schwellwertes werden die Thyristoren durch Anlegen eines Einschaltsignals eingeschaltet, so dass die Wechselspannungsseite der Umrichtereinheit mit den mindestens zwei Kurzschliesserwiderständen verbunden wird. Erfindungsgemäss ist eine Spannungsbegrenzungseinheit zur Begrenzung einer Überspannung des Gleichspannungskreises mit dem Gleichspannungskreis verbunden, wobei die Spannungsbegrenzungseinheit mit den mindestens zwei Kurzschliesserwiderständen verbunden ist. Nach Unterschreiten des Schwellwertes schaltet die Umrichtereinheit die Wechselspannungsseite der Umrichtereinheit an den Spannungsnullpunkt des Gleichspannungskreises und das Einschaltsignal wird nicht mehr angelegt. Die Spannungsbegrenzungseinheit verbindet die mindestens zwei Kurzschliesserwiderstände für eine einstellbare Zeitdauer mit dem Gleichspannungskreis, wobei danach die Umrichtereinheit die Wechselspannungsseite der Umrichtereinheit wieder vom Spannungsnullpunkt des Gleichspannungskreises trennt.

Bei einem Umrichtersystem zum Schalten von zwei Spannungsniveaus umfasst das Umrichtersystem ebenfalls eine Umrichtereinheit, an deren Gleichspannungsseite ein Gleichspannungskreis verbunden ist und an deren Wechselspannungsseite eine Kurzschliesserschaltung verbunden ist, wobei die Kurzschliesserschaltung eine Vielzahl an Thyristoren und einen Kurzschliesserwiderstand aufweist. Der Strom durch die Umrichtereinheit wird auf einen Schwellwert hin überwacht und bei Überschreiten des Schwellwertes werden die Thyristoren durch Anlegen eines Einschaltsignals eingeschaltet, so dass die Wechselspannungsseite der Umrichtereinheit mit dem Kurzschliesserwiderstand verbunden wird. Nach der Erfindung ist nun eine Spannungsbegrenzungseinheit zur Begrenzung einer Überspannung des Gleichspannungskreises mit dem Gleichspannungskreis verbunden, wobei die Spannungsbegrenzungseinheit mit dem Kurzschliesserwiderstand verbunden ist. Nach Unterschreiten des Schwellwertes schaltet die Umrichtereinheit die Wechselspannungsseite der Umrichtereinheit an den negativen oder positiven Spannungspunkt des Gleichspannungskreises und das Einschaltsignal wird nicht mehr angelegt. Die Spannungsbegrenzungseinheit verbindet den Kurzschliesserwiderstand für eine einstellbare Zeitdauer mit dem Gleichspannungskreis, wobei danach die Umrichtereinheit die Wechselspannungsseite der Umrichtereinheit wieder vom negativen oder positiven Spannungspunkt des Gleichspannungskreises trennt.

Das Umrichtersystem zum Schalten von mindestens drei Spannungsniveaus bzw. zum Schalten von zwei Spannungsniveaus ist damit sehr einfach aufgebaut und dementsprechend robust. Werden die Thyristoren der Kurzschliesserschaltung beispielsweise aufgrund eines Überstromes eingeschaltet, ist es mittels der Spannungsbegrenzungseinheit vorteilhaft möglich, die Thyristoren wieder problemlos, schnell und sicher abzuschalten.

Beim erfindungsgemässen Verfahren zum Betrieb eines Umrichtersystems zum Schalten von mindestens drei Spannungsniveaus ist bezüglich des Umrichtersystems an der Gleichspannungsseite der Umrichtereinheit ein Gleichspannungskreis verbunden, der einen Spannungsnullpunkt aufweist, und an der Wechselspannungsseite der Umrichtereinheit ist die besagte Kurzschliesserschaltung verbunden, wobei die Kurzschliesserschaltung neben der Vielzahl an Thyristoren mindestens zwei Kurzschliesserwiderstände aufweist. Verfahrensmässig wird nun der Strom durch die Umrichtereinheit auf einen Schwellwert hin überwacht und bei Überschreiten des Schwellwertes werden dann die Thyristoren durch Anlegen eines Einschaltsignals eingeschaltet, so dass die Wechselspannungsseite der Umrichtereinheit mit den mindestens zwei Kurzschliesserwiderständen verbunden wird. Dadurch übernehmen dann die mindestens zwei Kurzschliesserwiderstände den Strom solange, bis der Strom den Schwellwert wieder unterschreitet. Nach der Erfindung ist die bereits erwähnte Spannungsbegrenzungseinheit zur Begrenzung einer Überspannung des Gleichspannungskreises mit dem Gleichspannungskreis und zudem mit den mindestens zwei Kurzschliesserwiderständen verbunden, wobei nach Unterschreiten des Schwellwertes die Umrichtereinheit die Wechselspannungsseite der Umrichtereinheit an den Spannungsnullpunkt des Gleichspannungskreises schaltet und das Einschaltsignal nicht mehr angelegt wird, wodurch der nun unterhalb des Schwellwertes liegende Strom vorteilhaft zu der Umrichtereinheit kommutiert wird. Desweiteren verbindet dann die Spannungsbegrenzungseinheit die mindestens zwei Kurzschliesserwiderstände mit dem Gleichspannungskreis für eine einstellbare Zeitdauer. Dadurch wird eine Gegenspannung in den mindestens zwei Kurzschliesserwiderständen erzeugt, welche die Thyristoren mit Vorteil dann unkompliziert, schnell und sicher abschaltet. Die Spannungsbegrenzungseinheit arbeitet also vorteilhaft als Thyristorlöschschaltung. Danach trennt dann die Umrichtereinheit die Wechselspannungsseite der Umrichtereinheit wieder vom Spannungsnullpunkt des Gleichspannungskreises, so dass das Umrichtersystem wieder seinen normalen Betrieb aufnehmen kann.

Bei einem Umrichtersystem zum Schalten von zwei Spannungsniveaus ist an der Gleichspannungsseite der Gleichspannungskreis verbunden und an der Wechselspannungsseite ist die Kurzschliesserschaltung verbunden, wobei die Kurzschliesserschaltung eine Vielzahl an Thyristoren und einen Kurzschliesserwiderstand aufweist. Bei einem solchen Umrichtersystem zum Schalten von zwei Spannungsniveaus wird nun verfahrensmässig der Strom durch die Umrichtereinheit auch auf einen Schwellwert hin überwacht und bei Überschreiten des Schwellwertes werden die Thyristoren durch Anlegen eines Einschaltsignals eingeschaltet, so dass die Wechselspannungsseite der Umrichtereinheit mit dem Kurzschliesserwiderstand verbunden wird. Der Kurzschliesserwiderstand übernimmt den Überstrom solange, bis der Schwellwert wieder unterschritten wird. Erfindungsgemäss ist die schon erwähnte Spannungsbegrenzungseinheit zur Begrenzung einer Überspannung des Gleichspannungskreises mit dem Gleichspannungskreis und zudem mit dem Kurzschliesserwiderstand verbunden, wobei nach Unterschreiten des Schwellwertes die Umrichtereinheit die Wechselspannungsseite der Umrichtereinheit an den negativen oder positiven Spannungspunkt des Gleichspannungskreises schaltet und das Einschaltsignal nicht mehr angelegt wird, wodurch der Strom vorteilhaft zu der Umrichtereinheit kommutiert wird. Ferner verbindet die Spannungsbegrenzungseinheit den Kurzschliesserwiderstand mit dem Gleichspannungskreis für eine einstellbare Zeitdauer. Dadurch wird eine Gegenspannung im Kurzschliesserwiderstand erzeugt, welche die Thyristoren mit Vorteil dann unkompliziert, schnell und sicher abschaltet. Auch bei dieser Umrichterschaltung arbeitet die Spannungsbegrenzungseinheit somit vorteilhaft als Thyristorlöschschaltung. Danach trennt dann die Umrichtereinheit die Wechselspannungsseite der Umrichtereinheit wieder vom negativen oder positiven Spannungspunkt des Gleichspannungskreises.

Insgesamt erlaubt das erfindungsgemässe Verfahren somit ein äusserst problemloses, schnelles und vor allem sicheres Abschalten der Thyristoren der Kurzschliesserschaltung, so dass das Umrichtersystem in besonders einfacher Weise betrieben werden kann.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnung

Es zeigen:
- Fig. 1: eine erste Ausführungsform eines erfindungsgemässen Umrichtersystems,
- Fig. 2: die erste Ausführungsform des Umrichtersystems nach Fig. 1 in einem Betriebszustand nach dem erfindungsgemässen Verfahren zum Betrieb des Umrichtersystems,
- Fig. 3: die erste Ausführungsform des Umrichtersystems nach Fig. 1 in einem weiteren Betriebszustand nach dem erfindungsgemässen Verfahren zum Betrieb des Umrichtersystems,
- Fig. 4: eine Ausführungsform einer Thyristorschaltung einer Kurzschliesserschaltung des erfindungsgemässen Umrichtersystems und
- Fig. 5: eine zweite Ausführungsform eines erfindungsgemässen Umrichtersystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

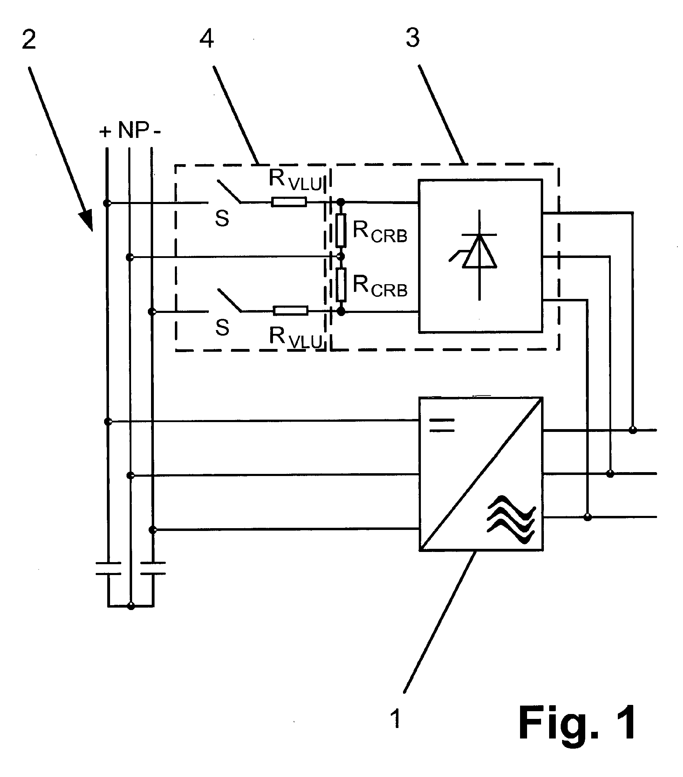

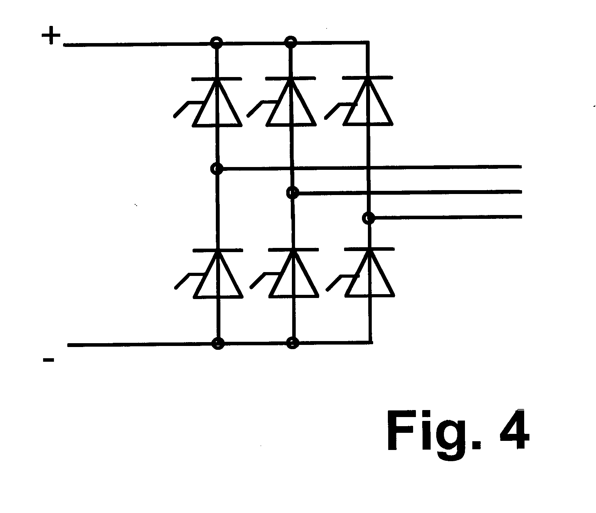

In Fig.1 ist eine erste Ausführungsform eines erfindungsgemässen Umrichtersystems, insbesondere zum Schalten von drei Spannungsniveaus, dargestellt. Das erfindungsgemässe Umrichtersystem zum Schalten von allgemein mindestens drei Spannungsniveaus umfasst eine Umrichtereinheit 1, an deren Gleichspannungsseite ein Gleichspannungskreis 2 verbunden ist, welcher Gleichspannungskreis 2 einen Spannungsnullpunkt NP aufweist, und an deren Wechselspannungsseite eine Kurzschliesserschaltung 3 verbunden ist. Die Kurzschliesserschaltung 3 weist eine Vielzahl an Thyristoren und mindestens zwei Kurzschliesserwiderstände R_{CRB} auf. In Fig. 4 ist eine beispielhafte Ausführungsform einer Thyristorschaltung der Kurzschliesserschaltung 3 gezeigt. Erfindungsgemäss ist eine Spannungsbegrenzungseinheit 4 zur Begrenzung einer Überspannung des Gleichspannungskreises 2 mit dem Gleichspannungskreis 2 verbunden, wobei die Spannungsbegrenzungseinheit 4 mit den mindestens zwei Kurzschliesserwiderständen R_{CRB} verbunden ist. Typischerweise dient die Spannungsbegrenzungseinheit 4 dazu, Überspannungen im Gleichspannungskreis 2 zu begrenzen und zu reduzieren. Dazu wird lediglich der ansteuerbare Leistungsschalter S geschlossen, so dass ein Strom über die Begrenzungswiderstände R_{VLU} und über die Kurzschliesserwiderstände R_{CRB} fliesst, um die auftretende Überspannung im Gleichspannungskreis 2 zu begrenzen und zu reduzieren. Werden die Thyristoren der Kurzschliesserschaltung 3 beispielsweise aufgrund eines Überstromes eingeschaltet, ist es mittels der Spannungsbegrenzungseinheit 4 zudem vorteilhaft möglich, die Thyristoren wieder problemlos, schnell und sicher abzuschalten. Das diesbezügliche erfindungsgemässe Verfahren zum Betrieb des erfindungsgemässen Umrichtersystems gemäss Fig. 1 und der damit verbundene Einsatz der Spannungsbegrenzungseinheit 4 werden noch näher erläutert.

Beim Umrichtersystem zum Schalten von drei Spannungsniveaus gemäß Fig. 1 weist die Spannungsbegrenzungseinheit 4 vorzugsweise zwei Serienschaltungen mit jeweils einem Begrenzungswiderstand R_{VLU} und einem ansteuerbaren Leistungsschalter S auf. Als ansteuerbarer Leistungsschalter S ist ein ansteuerbarer mechanischer Schalter oder ein ansteuerbarer Leistungshalbleiterschalter denkbar, wobei der ansteuerbare Leistungshalbleiterschalter dann beispielsweise als Abschaltthyristor (GTO - Gate Turn-Off Thyristor), als integrierter Thyristor mit kommutierter Ansteuerelektrode (IGCT - Integrated Gate Commutated Thyristor), als Leistungs-MOSFET oder als Bipolartransistor mit isoliert angeordneter Gateelektrode (IGBT) ausgebildet sein kann. Der Gleichspannungskreis 2 ist gemäss Fig. 1 durch zwei seriell miteinander verbundene kapazitive Energiespeicher gebildet, wobei der Verbindungspunkt der beiden kapazitiven Energiespeicher einen Spannungsnullpunkt NP bildet. Die Kurzschliesserschaltung 3 weist gemäss Fig. 1 zwei Kurzschliesserwiderstände R_{CRB} auf, wobei jede Serienschaltung des Begrenzungswiderstandes R_{VLU} mit dem ansteuerbaren Leistungsschalter S mit jeweils einem der Kurzschliesserwiderstände R_{CRB} verbunden ist. Vorzugsweise sind die Kurzschliesserwiderstände R_{CRB} miteinander verbunden. Der Verbindungspunkt der beiden Kurzschliesserwiderstände R_{CRB} ist insbesondere nach Fig. 1 mit dem Spannungsnullpunkt NP des Gleichspannungskreises 2 verbunden. Insgesamt ist das Umrichtersystem zum Schalten von drei Spannungsniveaus demzufolge äusserst einfach realisierbar und damit entsprechend robust.

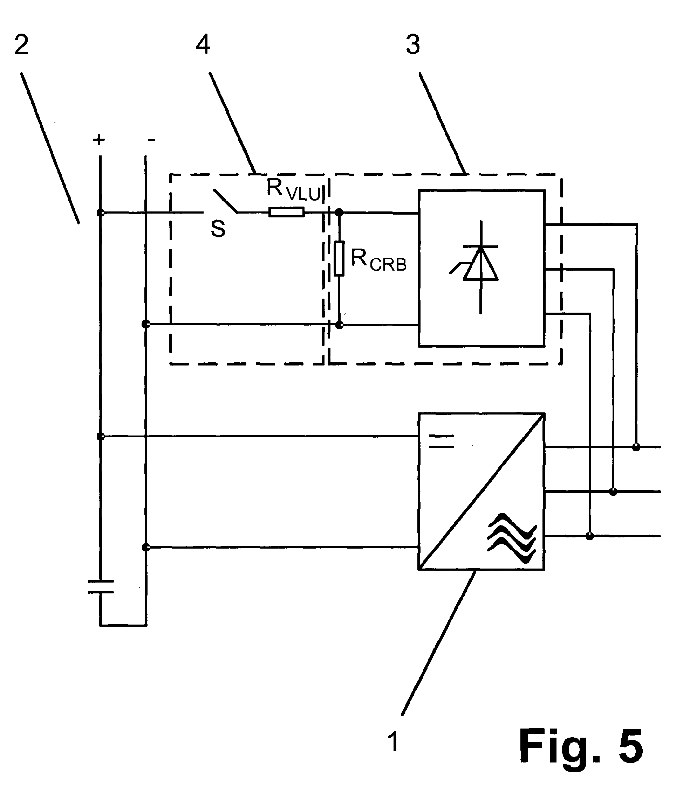

Fig. 5 zeigt eine zweite Ausführungsform des erfindungsgemässen Umrichtersystems, nämlich ein Umrichtersystems zum Schalten von zwei Spannungsniveaus. Nach Fig. 5 weist die Spannungsbegrenzungseinheit 4 eine einzige Serienschaltung des Begrenzungswiderstandes R_{VLU} mit dem ansteuerbaren Leistungsschalter S auf, wobei die Serienschaltung des Begrenzungswiderstandes R_{VLU} mit dem ansteuerbaren Leistungsschalter S mit dem Kurzschliesserwiderstand R_{CRB} verbunden ist. Der Gleichspannungskreis 2 ist gemäss Fig. 5 durch einen kapazitiven Energiespeicher gebildet. Typischerweise dient auch die Spannungsbegrenzungseinheit 4 in Fig. 5 dazu, Überspannungen im Gleichspannungskreis 2 zu begrenzen und zu reduzieren. Dazu wird lediglich der ansteuerbare Leistungsschalter S geschlossen, so dass ein Strom über den Begrenzungswiderstand R_{VLU} und über den Kurzschliesserwiderstand R_{CRB} fliesst, um die auftretende Überspannung im Gleichspannungskreis 2 zu begrenzen und zu reduzieren. Insgesamt lässt sich auch das Umrichtersystem zum Schalten von zwei Spannungsniveaus gemäss Fig. 5 äusserst einfach realisieren und ist aus diesem Grund sehr robust. Werden die Thyristoren der Kurzschliesserschaltung 3 beispielsweise aufgrund eines Überstromes eingeschaltet, ist es mittels der Spannungsbegrenzungseinheit 4 zudem vorteilhaft möglich, die Thyristoren wieder problemlos, schnell und sicher abzuschalten. Das diesbezügliche erfindungsgemässe Verfahren zum Betrieb des erfindungsgemässen Umrichtersystems gemäss Fig. 5 und der damit verbundene Einsatz der Spannungsbegrenzungseinheit 4 werden noch näher erläutert.

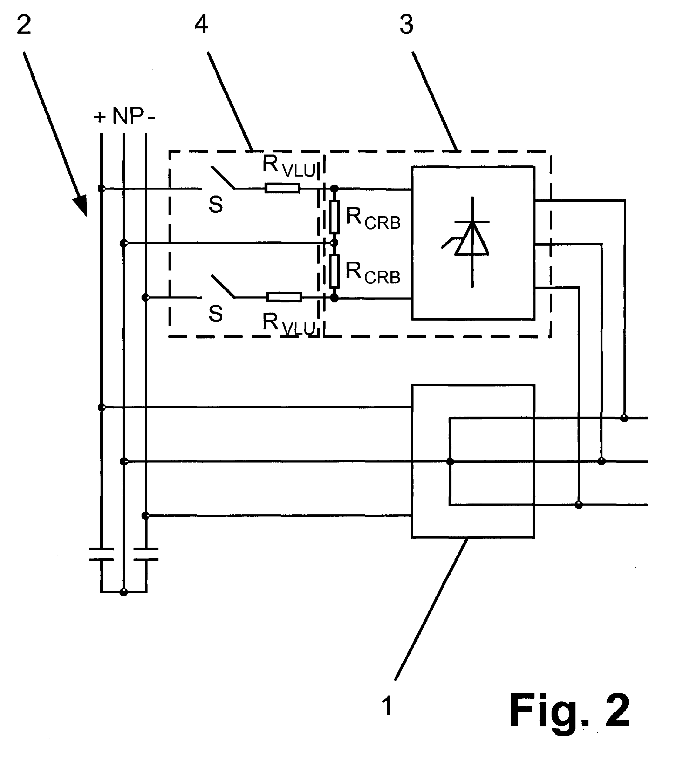

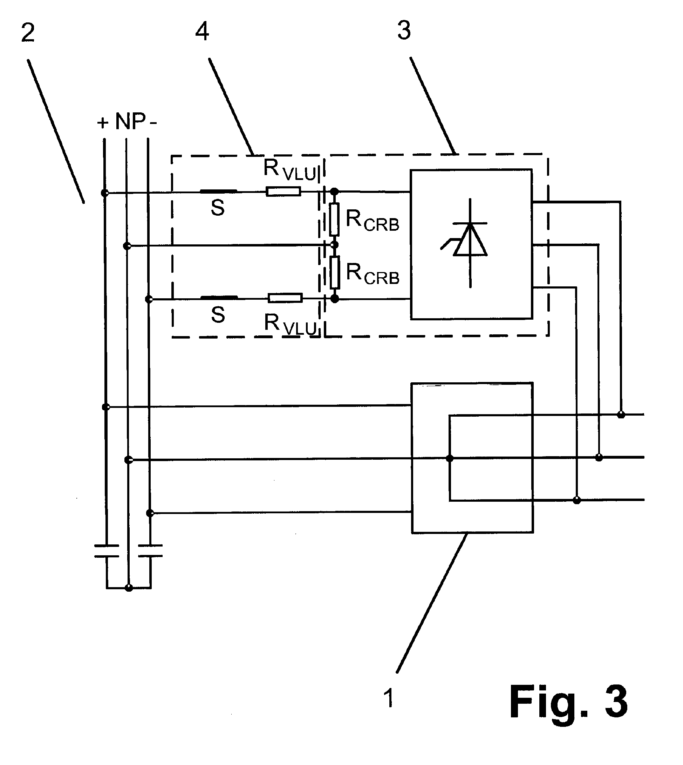

Nachfolgend wird das erfindungsgemässe Verfahren zum Betrieb des Umrichtersystems zum Schalten von allgemein mindestens drei Spannungsniveaus anhand der Fig. 1 bis Fig. 3 erläutert. Beim Umrichtersystem zum Schalten von mindestens drei Spannungsniveaus weist die Kurzschliesserschaltung neben der Vielzahl an Thyristoren mindestens zwei Kurzschliesserwiderstände R_{CRB} auf. Verfahrensmässig wird nun der Strom durch die Umrichtereinheit 1 auf einen Schwellwert hin überwacht und bei Überschreiten des Schwellwertes werden dann die Thyristoren der Kurzschliesserschaltung 3 durch Anlegen eines Einschaltsignals eingeschaltet, so dass die Wechselspannungsseite der Umrichtereinheit 1 mit den mindestens zwei Kurzschliesserwiderständen R_{CRB} verbunden wird. Dadurch übernehmen dann die mindestens zwei Kurzschliesserwiderstände R_{CRB} den Strom solange, bis der Strom den Schwellwert wieder unterschreitet. Nach der Erfindung ist die Spannungsbegrenzungseinheit 4 mit den mindestens zwei Kurzschliesserwiderständen R_{CRB} verbunden, wobei nach Unterschreiten des Schwellwertes die Umrichtereinheit 1 die Wechselspannungsseite der Umrichtereinheit 1 an den Spannungsnullpunkt NP des Gleichspannungskreises 2 schaltet, wie dies schematisch in Fig. 2 beispielhaft für ein Umrichtersystem zum Schalten von drei Spannungsniveaus dargestellt ist, und das Einschaltsignal für die Thyristoren der Kurzschliesserschaltung 3 nicht mehr angelegt wird. Der nun unterhalb des Schwellwertes liegende Strom durch die Kurzschliesserwiderstände R_{CRB} kommutiert dann vorteilhaft zu der Umrichtereinheit 1, da die Impedanz in der Umrichtereinheit 1 kleiner ist, als diejenige der Kurzschliesserwiderstände R_{CRB}. Darüber hinaus verbindet dann die Spannungsbegrenzungseinheit 4 die mindestens zwei Kurzschliesserwiderstände R_{CRB} mit dem Gleichspannungskreis 2 für eine einstellbare Zeitdauer, wobei die Verbindung des jeweiligen Kurzschliesserwiderstandes R_{CRB} mit dem Gleichspannungskreis 2 über den jeweiligen Begrenzungswiderstand R_{VLU} erfolgt. Im Falle eines Umrichtersystems zum Schalten von drei Spannungsniveaus gemäss Fig. 1 werden die ansteuerbaren Leistungsschalter S der Spannungsbegrenzungseinheit 4 zur Verbindung der zwei Kurzschliesserwiderstände R_{CRB} mit dem Gleichspannungskreis 2 für die einstellbare Zeitdauer geschlossen, wie dies schematisch in Fig. 3 beispielhaft für ein Umrichtersystem zum Schalten von drei Spannungsniveaus dargestellt ist. Die Spannungsbegrenzungseinheit 4 dient also bezogen auf das erfindungsgemässe Verfahren nicht der Spannungsbegrenzung bzw. Spannungsreduzierung bei einer auftretenden Überspannung des Gleichspannungskreises 2, sondern arbeitet als Thyristorlöschschaltung, kann aber selbstverständlich zur Spannungsbegrenzung bzw. Spannungsreduzierung eingesetzt werden. Durch das Schliessen der ansteuerbaren Leistungsschalter S der Spannungsbegrenzungseinheit 4 zur Verbindung der Kurzschliesserwiderstände R_{CRB} mit dem Gleichspannungskreis 2 wird eine Gegenspannung in den Kurzschliesserwiderständen R_{CRB} generiert, welche die Thyristoren der Kurzschliesserschaltung 3 mit Vorteil dann unkompliziert, schnell und sicher abschaltet. Danach trennt dann die Umrichtereinheit 1 die Wechselspannungsseite der Umrichtereinheit 1 wieder vom Spannungsnullpunkt NP des Gleichspannungskreises 2, so dass das Umrichtersystem wieder seinen normalen Betrieb aufnehmen kann, indem die Umrichtereinheit 1 beispielweise wieder ein typischerweise an der Wechselspannungsseite der Umrichtereinheit 1 angeschlossenes elektrisches Wechselspannungsnetz und/oder eine elektrische Last speist.

Bei einem Umrichtersystem zum Schalten von zwei Spannungsniveaus nach Fig. 5 wird verfahrensmässig auch der Strom durch die Umrichtereinheit 1 auch auf einen Schwellwert hin überwacht und bei Überschreiten des Schwellwertes werden die Thyristoren durch Anlegen eines Einschaltsignals eingeschaltet, so dass die Wechselspannungsseite der Umrichtereinheit 1 mit dem Kurzschliesserwiderstand R_{CRB} verbunden wird. Der Kurzschliesserwiderstand R_{CRB} übernimmt den Strom solange, bis der Strom den Schwellwert wieder unterschreitet. Erfindungsgemäss schaltet die Umrichtereinheit 1 nach Unterschreiten des Schwellwertes die Wechselspannungsseite der Umrichtereinheit 1 an den negativen oder positiven Spannungspunkt des Gleichspannungskreises 2 und das Einschaltsignal wird nicht mehr and die Thyristoren angelegt. Der nun unterhalb des Schwellwertes liegende Strom durch den Kurzschliesserwiderstand R_{CRB} kommutiert dann vorteilhaft zu der Umrichtereinheit 1, da die Impedanz in der Umrichtereinheit 1 kleiner ist, als diejenige des Kurzschliesserwiderstandes R_{CRB}. Ferner verbindet die Spannungsbegrenzungseinheit 4 den Kurzschliesserwiderstand R_{CRB} mit dem Gleichspannungskreis 2 für eine einstellbare Zeitdauer, wobei die Verbindung des Kurzschliesserwiderstandes R_{CRB} mit dem Gleichspannungskreis 2 über den Begrenzungswiderstand R_{VLU} erfolgt. Die Verbindung des Kurzschliesserwiderstandes R_{CRB} mit dem Gleichspannungskreis 2 erfolgt durch Schliessen des ansteuerbaren Leistungsschalters S 2 für die einstellbare Zeitdauer. Die Spannungsbegrenzungseinheit 4 dient also bezogen auf das erfindungsgemässe Verfahren nicht der Spannungsbegrenzung bzw. Spannungsreduzierung bei einer auftretenden Überspannung des Gleichspannungskreises 2, sondern arbeitet als Thyristorlöschschaltung, kann aber selbstverständlich zur Spannungsbegrenzung bzw. Spannungsreduzierung eingesetzt werden. Durch das Schliessen des ansteuerbaren Leistungsschalters S der Spannungsbegrenzungseinheit 4 zur Verbindung der Kurzschliesserwiderstände R_{CRB} mit dem Gleichspannungskreis 2 wird eine Gegenspannung in dem Kurzschliesserwiderständen R_{CRB} generiert, welche die Thyristoren der Kurzschliesserschaltung 3 mit Vorteil dann unkompliziert, schnell und sicher abschaltet. Danach trennt dann die Umrichtereinheit 1 die Wechselspannungsseite der Umrichtereinheit 1 wieder vom negativen oder positiven Spannungspunkt des Gleichspannungskreises 2, so dass das Umrichtersystem wieder seinen normalen Betrieb aufnehmen kann, indem die Umrichtereinheit 1 beispielweise wieder ein typischerweise an der Wechselspannungsseite der Umrichtereinheit 1 angeschlossenes elektrisches Wechselspannungsnetz und/oder eine elektrische Last speist.

Insgesamt ermöglicht das erfindungsgemässe Verfahren zum Betrieb eines Umrichtersystems zum Schalten von mindestens drei Spannungsniveaus und zum Betrieb eines Umrichtersystems zum Schalten von zwei Spannungsniveaus somit ein äusserst problemloses, schnelles und vor allem sicheres Abschalten der Thyristoren der Kurzschliesserschaltung 3, so dass das Umrichtersystem in besonders einfacher Weise betrieben werden kann.

Werden im eingangs bereits erwähnten jeweiligen Grid Code Modalitäten definiert, gemäss welchen die eine doppeltgespeiste Asynchronmaschine als elektrische Last innerhalb kürzester Frist spannungsstützend auf das elektrische Versorgungsnetz einwirken muss, ist die sofortige Rückkehr zu einem geregelten normalen Betrieb des Umrichtersystems, insbesondere der Umrichtereinheit 1, unter Umständen zwingend. Das erfindungsgemässe Umrichtersystem und das erfindungsgemässe Verfahren zum Betrieb eines Umrichtersystems zum Schalten von mindestens drei Spannungsniveaus und zum Betrieb eines Umrichtersystems zum Schalten von zwei Spannungsniveaus, wie es vorstehend detailliert beschrieben wurde, ist somit eine Lösung, welche es ermöglicht, das gewünschte Betriebsverhalten des Umrichtersystems bei dessen normalen Betrieb sicherzustellen.

### Bezugszeichenliste

- 1: Umrichtereinheit
- 2: Gleichspannungskreis
- 3: Kurzschliesserschaltung
- 4: Spannungsbegrenzungseinheit
- R_{CRB}: Kurzschliesserwiderstand
- R_{VLU}: Begrenzungswiderstand
- S: ansteuerbarer Leistungsschalter
- NP: Spannungsnullpunkt des Gleichspannungskreises

## Patentansprüche

1. Umrichtersystem zum Schalten von mindestens drei Spannungsniveaus mit einer Umrichtereinheit (1), an deren Gleichspannungsseite ein Gleichspannungskreis (2) verbunden ist, welcher Gleichspannungskreis (2) einen Spannungsnullpunkt (NP) aufweist, und an deren Wechselspannungsseite eine Kurzschliesserschaltung (3) verbunden ist, wobei die Kurzschliesserschaltung (3) eine Vielzahl an Thyristoren und mindestens zwei Kurzschliesserwiderstände (R_{CRB}) aufweist und der Strom durch die Umrichtereinheit (1) auf einen Schwellwert hin überwacht wird und bei Überschreiten des Schwellwertes die Thyristoren durch Anlegen eines Einschaltsignals eingeschaltet werden, so dass die Wechselspannungsseite der Umrichtereinheit (1) mit den mindestens zwei Kurzschliesserwiderständen (R_{CRB}) verbunden wird,
**dadurch gekennzeichnet,**
**dass** eine Spannungsbegrenzungseinheit (4) zur Begrenzung einer Überspannung des Gleichspannungskreises (2) und zur Thyristorlöschung mit dem Gleichspannungskreis (2) verbunden ist, die Spannungsbegrenzungseinheit (4) mit den mindestens zwei Kurzschliesserwiderständen (R_{CRB}) verbunden ist, wobei nach Unterschreiten des Schwellwertes die Umrichtereinheit (1) die Wechselspannungsseite der Umrichtereinheit (1) an den Spannungsnullpunkt (NP) des Gleichspannungskreises (2) schaltet und das Einschaltsignal nicht mehr angelegt wird, die Spannungsbegrenzungseinheit (4) die mindestens zwei Kurzschliesserwiderstände (R_{CRB}) für eine einstellbare Zeitdauer mit dem Gleichspannungskreis (2) verbindet und danach die Umrichtereinheit (1) die Wechselspannungsseite der Umrichtereinheit (1) wieder vom Spannungsnullpunkt (NP) des Gleichspannungskreises (2) trennt.

2. Umrichtersystem zum Schalten von zwei Spannungsniveaus mit einer Umrichtereinheit (1), an deren Gleichspannungsseite ein Gleichspannungskreis (2) verbunden ist und an deren Wechselspannungsseite eine Kurzschliesserschaltung (3) verbunden ist, wobei die Kurzschliesserschaltung (3) eine Vielzahl an Thyristoren und einen Kurzschliesserwiderstand (R_{CRB}) aufweist, wobei der Strom durch die Umrichtereinheit (1) auf einen Schwellwert hin überwacht wird und bei Überschreiten des Schwellwertes die Thyristoren durch Anlegen eines Einschaltsignals eingeschaltet werden, so dass die Wechselspannungsseite der Umrichtereinheit (1) mit dem Kurzschliesserwiderstand (R_{CRB}) verbunden wird,
**dadurch gekennzeichnet,**
**dass** eine Spannungsbegrenzungseinheit (4) zur Begrenzung einer Überspannung des Gleichspannungskreises (2) und zur Thyristorlöschung mit dem Gleichspannungskreis (2) verbunden ist, die Spannungsbegrenzungseinheit (4) mit dem Kurzschliesserwiderstand (R_{CRB}) verbunden ist, wobei nach Unterschreiten des Schwellwertes die Umrichtereinheit (1) die Wechselspannungsseite der Umrichtereinheit (1) an den negativen oder positiven Spannungspunkt des Gleichspannungskreises (2) schaltet und das Einschaltsignal nicht mehr angelegt wird, die Spannungsbegrenzungseinheit (4) den Kurzschliesserwiderstand (R_{CRB}) für eine einstellbare Zeitdauer mit dem Gleichspannungskreis (2) verbindet und danach die Umrichtereinheit (1) die Wechselspannungsseite der Umrichtereinheit (1) wieder vom negativen oder positiven Spannungspunkt des Gleichspannungskreises (2) trennt.

3. Umrichtersystem nach Anspruch 1, **dadurch gekennzeichnet, dass** im Falle eines Umrichtersystems zum Schalten von drei Spannungsniveaus die Spannungsbegrenzungseinheit (4) zwei Serienschaltungen mit jeweils einem Begrenzungswiderstand (R_{VLU}) und einem ansteuerbaren Leistungsschalter (S) aufweist, dass die Kurzschliesserschaltung (3) zwei Kurzschliesserwiderstände (R_{CRB}) aufweist, und dass jede Serienschaltung des Begrenzungswiderstandes (R_{VLU}) mit dem ansteuerbaren Leistungsschalter (S) mit jeweils einem der Kurzschliesserwiderstände (R_{CRB}) verbunden ist.

4. Umrichtersystem nach Anspruch 3, **dadurch gekennzeichnet, dass** die Kurzschliesserwiderstände (R_{CRB}) miteinander verbunden sind.

5. Umrichtersystem nach Anspruch 2, **dadurch gekennzeichnet, dass** im Falle eines Umrichtersystems zum Schalten von zwei Spannungsniveaus die Spannungsbegrenzungseinheit (4) eine Serienschaltung eines Begrenzungswiderstandes (R_{VLU}) mit einem ansteuerbaren Leistungsschalter (S) aufweist, und
dass die Serienschaltung des Begrenzungswiderstandes (R_{VLU}) mit dem ansteuerbaren Leistungsschalter (S) mit dem Kurzschliesserwiderstand (R_{CRB}) verbunden ist.

6. Verfahren zum Betrieb eines Umrichtersystems zum Schalten von mindestens drei Spannungsniveaus, wobei das Umrichtersystem eine Umrichtereinheit (1) aufweist, an deren Gleichspannungsseite ein Gleichspannungskreis (2) verbunden ist, welcher Gleichspannungskreis (2) einen Spannungsnullpunkt (NP) aufweist, und an deren Wechselspannungsseite eine Kurzschliesserschaltung (3) verbunden ist, wobei die Kurzschliesserschaltung 3) eine Vielzahl an Thyristoren und mindestens zwei Kurzschliesserwiderstände (R_{CRB}) aufweist,
bei dem der Strom durch die Umrichtereinheit (1) auf einen Schwellwert hin überwacht wird und bei Überschreiten des Schwellwertes die Thyristoren durch Anlegen eines Einschaltsignals eingeschaltet werden, so dass die Wechselspannungsseite der Umrichtereinheit (1) mit den mindestens zwei Kurzschliesserwiderständen (R_{CRB}) verbunden wird,
**dadurch gekennzeichnet,**
**dass** eine Spannungsbegrenzungseinheit (4) zur Begrenzung einer Überspannung des Gleichspannungskreises (2) mit dem Gleichspannungskreis (2) verbunden ist, die Spannungsbegrenzungseinheit (4) mit den mindestens zwei Kurzschliesserwiderständen (R_{CRB}) verbunden ist und nach Unterschreiten des Schwellwertes die Umrichtereinheit (1) die Wechselspannungsseite der Umrichtereinheit (1) an den Spannungsnullpunkt (NP) des Gleichspannungskreises (2) schaltet und das Einschaltsignal nicht mehr angelegt wird, dass die Spannungsbegrenzungseinheit (4) die mindestens zwei Kurzschliesserwiderstände (R_{CRB}) für eine einstellbare Zeitdauer mit dem Gleichspannungskreis (2) verbindet, und dass danach die Umrichtereinheit (1) die Wechselspannungsseite der Umrichtereinheit (1) wieder vom Spannungsnullpunkt (NP) des Gleichspannungskreises (2) trennt.

7. Verfahren zum Betrieb eines Umrichtersystems zum Schalten von zwei Spannungsniveaus, wobei das Umrichtersystem eine Umrichtereinheit (1) aufweist, an deren Gleichspannungsseite ein Gleichspannungskreis (2) verbunden ist und an deren Wechselspannungsseite eine Kurzschliesserschaltung (3) verbunden ist, wobei die Kurzschliesserschaltung (3) eine Vielzahl an Thyristoren und einen Kurzschliesserwiderstand (R_{CRB}) aufweist,
bei dem der Strom durch die Umrichtereinheit (1) auf einen Schwellwert hin überwacht wird und bei Überschreiten des Schwellwertes die Thyristoren durch Anlegen eines Einschaltsignals eingeschaltet werden, so dass die Wechselspannungsseite der Umrichtereinheit (1) mit dem Kurzschliesserwiderstand (R_{CRB}) verbunden wird,
**dadurch gekennzeichnet,**
**dass** eine Spannungsbegrenzungseinheit (4) zur Begrenzung einer Überspannung des Gleichspannungskreises (2) mit dem Gleichspannungskreis (2) verbunden ist, die Spannungsbegrenzungseinheit (4) mit dem Kurzschliesserwiderstand (R_{CRB}) verbunden ist und nach Unterschreiten des Schwellwertes die Umrichtereinheit (1) die Wechselspannungsseite der Umrichtereinheit (1) an den negativen oder positiven Spannungspunkt des Gleichspannungskreises (2) schaltet und das Einschaltsignal nicht mehr angelegt wird,
**dass** die Spannungsbegrenzungseinheit (4) den Kurzschliesserwiderstand (R_{CRB}) für eine einstellbare Zeitdauer mit dem Gleichspannungskreis (2) verbindet, und
**dass** danach die Umrichtereinheit (1) die Wechselspannungsseite der Umrichtereinheit (1) wieder vom negativen oder positiven Spannungspunkt des Gleichspannungskreises (2) trennt.

8. Verfahren nach Anspruch 6, **dadurch gekennzeichnet, dass** im Falle eines Umrichtersystems zum Schalten von drei Spannungsniveaus die Spannungsbegrenzungseinheit (4) zwei Serienschaltungen mit jeweils einem Begrenzungswiderstand (R_{VLU}) und einem ansteuerbaren Leistungsschalter (S) aufweist, die Kurzschliesserschaltung (3) zwei Kurzschliesserwiderstände (R_{CRB}) aufweist, jede Serienschaltung des Begrenzungswiderstandes (R_{VLU}) mit dem ansteuerbaren Leistungsschalter (S) mit jeweils einem der Kurzschliesserwiderstände (R_{CRB}) verbunden ist, die Kurzschliesserwiderstände (R_{CRB}) miteinander verbunden sind und die ansteuerbaren Leistungsschalter (S) der Spannungsbegrenzungseinheit (4) zur Verbindung der zwei Kurzschliesserwiderstände (R_{CRB}) mit dem Gleichspannungskreis (2) für die einstellbare Zeitdauer geschlossen werden.

9. Verfahren nach Anspruch 7, **dadurch gekennzeichnet, dass** die Spannungsbegrenzungseinheit (4) eine Serienschaltungen mit einem Begrenzungswiderstand (R_{VLU}) und einem ansteuerbaren Leistungsschalter (S) aufweist, die Serienschaltung des Begrenzungswiderstand (R_{VLU}) mit dem ansteuerbaren Leistungsschalter (S) mit dem Kurzschliesserwiderstand (R_{CRB}) verbunden ist und der ansteuerbare Leistungsschalter (S) der Spannungsbegrenzungseinheit (4) zur Verbindung des Kurzschliesserwiderstandes (R_{CRB}) mit dem Gleichspannungskreis (2) für die einstellbare Zeitdauer geschlossen wird.

## Claims

1. Converter system for the switching of least three voltage levels with a converter unit (1), the d.c. side of which is connected to a d.c. circuit (2), wherein the said d.c. circuit (2) is provided with a voltage zero point (NP), and the a.c. side of which is connected to a shorting circuit (3), wherein the shorting circuit (3) is provided with a plurality of thyristors and at least two shorting resistors (R_{CRB}), the current carried by the converter unit (1) is monitored in relation to a threshold value and, where this threshold value is exceeded, the thyristors are actuated by the application of a closing signal, such that the a.c. side of the converter unit (1) is connected to the at least two shorting resistors (R_{CRB}), **characterized in that**
a voltage-limiting device (4) for the restriction of any overvoltage on the d.c. circuit (2) and for the turn-off of thyristors is connected to the said d.c. circuit (2), whereby the said voltage-limiting device (4) is connected to the at least two shorting resistors (R_{CRB}) and wherein, when the threshold value is no longer exceeded, the converter unit (1) switches the a.c. side of the said converter unit (1) to the voltage zero point (NP) of the d.c. circuit (2) and the closing signal is no longer applied, the voltage-limiting device (4) connects the at least two shorting resistors (R_{CRB}) to the d.c. circuit for a configurable time interval, whereafter the converter unit (1) isolates the a.c. side of the said converter unit (1) from the voltage zero point (NP) of the d.c. circuit (2) once more.

2. Converter system for the switching of two voltage levels with a converter unit (1), the d.c. side of which is connected to a d.c. circuit (2) and the a.c. side of which is connected to a shorting circuit (3), wherein the shorting circuit (3) is provided with a plurality of thyristors and one shorting resistor (R_{CRB}) , the current carried by the converter unit (1) is monitored in relation to a threshold value and, where this threshold value is exceeded, the thyristors are actuated by the application of a closing signal, such that the a.c. side of the converter unit (1) is connected to the shorting resistor (R_{CRB}), **characterized in that**
a voltage-limiting device (4) for the restriction of any overvoltage on the d.c. circuit (2) and for the turn-off of thyristors is connected to the said d.c. circuit (2), whereby the said voltage-limiting device (4) is connected to the shorting resistor (R_{CRB}) and wherein, when the threshold value is no longer exceeded, the converter unit (1) switches the a.c. side of the said converter unit (1) to the negative or positive voltage point of the d.c. circuit (2) and the closing signal is no longer applied, the voltage-limiting device (4) connects the shorting resistor (R_{CRB}) to the d.c. circuit (2) for a configurable time interval, whereafter the converter unit (1) isolates the a.c. side of the said converter unit (1) from the positive or negative voltage point of the d.c. circuit (2) once more.

3. Converter system according to Claim 1, **characterized in that**, in the case of converter system for the switching of three voltage levels, the voltage-limiting device (4) is provided with two series circuits, each comprising a limiting resistor (R_{VLU}) and a controllable power switch (S), the shorting circuit (3) is provided with two shorting resistors (R_{CRB}), and each series circuit of the limiting resistor (R_{VLU}) and comprising the controllable power switch (S) is connected to one of the shorting resistors (R_{CRB}) respectively.

4. Converter system according to Claim 3, **characterized in that** the shorting resistors (R_{CRB}) are interconnected.

5. The converter system according to Claim 2, **characterized in that**, in the case of a converter system for the switching of two voltage levels, the voltage-limiting device (4) is provided with a series circuit comprising a limiting resistor (R_{VLU}) and a controllable power switch (S), and the series circuit comprising the limiting resistor (R_{VLU}) and the controllable power switch (S) is connected to the shorting resistor (R_{CRB}).

6. Method for the operation of a converter system for the switching of at least three voltage levels, wherein the converter system is provided with a converter unit (1), the d.c. side of which is connected to a d.c. circuit (2), wherein the said d.c. circuit (2) is provided with a voltage zero point (NP), and the a.c. side of which is connected to a shorting circuit (3), wherein the shorting circuit (3) is provided with a plurality of thyristors and at least two shorting resistors (R_{CRB}), in which the current carried by the converter unit (1) is monitored in relation to a threshold value and, where this threshold value is exceeded, the thyristors are actuated by the application of a closing signal, such that the a.c. side of the converter unit (1) is connected to the at least two shorting resistors (R_{CRB}), **characterized in that**
a voltage-limiting device (4) for the restriction of any overvoltage on the d.c. circuit (2) is connected to the said d.c. circuit (2), wherein the voltage-limiting device (4) is connected to the at least two shorting resistors (R_{CRB}) and, when the threshold value is no longer exceeded, the converter unit (1) switches the a.c. side of the converter unit (1) to the voltage zero point (NP) of the d.c. circuit (2), and the closing signal is no longer applied,
and **in that** the voltage-limiting device (4) connects the at least two shorting resistors (R_{CRB}) to the d.c. circuit (2) for a configurable time interval,
whereafter the converter unit (1) isolates the a.c. side of the said converter unit (1) from the voltage zero point (NP) of the d.c. circuit (2) once more.

7. Method for the operation of a converter system for the switching of two voltage levels, wherein the converter system is provided with a converter unit (1), the d.c. side of which is connected to a d.c. circuit (2) and the a.c. side of which is connected to a shorting circuit (3), wherein the shorting circuit (3) is provided with a plurality of thyristors and one shorting resistor (R_{CRB}), in which the current carried by the converter unit (1) is monitored in relation to a threshold value and, where this threshold value is exceeded, the thyristors are actuated by the application of a closing signal, such that the a.c. side of the converter unit (1) is connected to the shorting resistor (R_{CRB}), **characterized in that** a voltage-limiting device (4) for the restriction of any overvoltage on the d.c. circuit (2) is connected to the said d.c. circuit (2), wherein the voltage-limiting device (4) is connected to the shorting resistor (R_{CRB}) and, when the threshold value is no longer exceeded, the converter unit (1) switches the a.c. side of the converter unit (1) to the negative or positive voltage point of the d.c. circuit (2), and the closing signal is no longer applied,
and **in that** the voltage-limiting device (4) connects the shorting resistor (R_{CRB}) to the d.c. circuit (2) for a configurable time interval, whereafter the converter unit (1) isolates the a.c. side of the said converter unit (1) from the negative or positive voltage point of the d.c. circuit (2) once more.

8. Method according to Claim 6, **characterized in that**, in the case of a converter system for the switching of three voltage levels, the voltage-limiting device (4) is provided with two series circuits, each comprising a limiting resistor (R_{VLU}) and a controllable power switch (S), the shorting circuit (3) is provided with two shorting resistors (R_{CRB}), each series comprising the limiting resistor (R_{VLU}) and the controllable power switch (S) is connected to one of the shorting resistors (R_{CRB}) respectively, the shorting resistors (R_{CRB}) are interconnected, and the controllable power switches (S) on the voltage-limiting device (4) for the connection of the two shorting resistors (R_{CRB}) with the d.c. circuit (2) are closed for the configurable time interval.

9. Method according to Claim 7, **characterized in that** the voltage-limiting device (4) is provided with a series circuit comprising a limiting resistor (R_{VLU}) and a controllable power switch (S), the series circuit comprising the limiting resistor (R_{VLU}) and the controllable power switch (S) is connected to the shorting resistor (R_{CRB}), and the controllable power switch (S) on the voltage-limiting device (4) for the connection of the shorting resistor (R_{CRB}) to the d.c. circuit (2) is closed for the configurable time interval.

## Revendications

1. Système convertisseur pour commuter au moins trois niveaux de tension comprenant un module convertisseur (1) au côté tension continue duquel est relié un circuit à tension continue (2), lequel circuit à tension continue (2) présente un point neutre de tension (NP), et au côté tension alternative duquel est relié un circuit de mise en court-circuit (3), le circuit de mise en court-circuit (3) présentant une pluralité de thyristors et au moins deux résistances de mise en court-circuit (R_{CRB}) et le courant à travers le module convertisseur (1) étant surveillé par rapport à une valeur de seuil et, en cas de dépassement de la valeur de seuil, les thyristors étant mis en circuit par application d'un signal de mise en circuit, de sorte que le côté tension alternative du module convertisseur (1) est relié avec les au moins deux résistances de mise en court-circuit (R_{CRB}),
**caractérisé en ce**
**qu'**un module de limitation de tension (4) destiné à limiter une surtension du circuit à tension continue (2) et destiné à éteindre les thyristors est relié avec le circuit à tension continue (2), le module de limitation de tension (4) est relié avec les au moins deux résistances de mise en court-circuit (R_{CRB}), le côté tension alternative du module convertisseur (1), après un franchissement vers le bas de la valeur de seuil du module convertisseur (1), commutant au point neutre de tension (NP) du circuit à tension continue (2) et le signal de mise en circuit n'étant plus appliqué, le module de limitation de tension (4) reliant les au moins deux résistances de mise en court-circuit (R_{CRB}) pendant une durée réglable avec le circuit à tension continue (2) et le module convertisseur (1) déconnectant ensuite de nouveau le côté tension alternative du module convertisseur (1) du point neutre de tension (NP) du circuit à tension continue (2).

2. Système convertisseur pour commuter deux niveaux de tension comprenant un module convertisseur (1) au côté tension continue duquel est relié un circuit à tension continue (2) et au côté tension alternative duquel est relié un circuit de mise en court-circuit (3), le circuit de mise en court-circuit (3) présentant une pluralité de thyristors et une résistance de mise en court-circuit (R_{CRB}), le courant à travers le module convertisseur (1) étant surveillé par rapport à une valeur de seuil et, en cas de dépassement de la valeur de seuil, les thyristors étant mis en circuit par application d'un signal de mise en circuit, de sorte que le côté tension alternative du module convertisseur (1) est relié avec la résistance de mise en court-circuit (R_{CRB}),
**caractérisé en ce**
**qu'**un module de limitation de tension (4) destiné à limiter une surtension du circuit à tension continue (2) et destiné à éteindre les thyristors est relié avec le circuit à tension continue (2), le module de limitation de tension (4) est relié avec la résistance de mise en court-circuit (R_{CRB}), le côté tension alternative du module convertisseur (1), après un franchissement vers le bas de la valeur de seuil du module convertisseur (1), commutant sur le point de tension négative ou positive du circuit à tension continue (2) et le signal de mise en circuit n'étant plus appliqué, le module de limitation de tension (4) reliant la résistance de mise en court-circuit (R_{CRB}) pendant une durée réglable avec le circuit à tension continue (2) et le module convertisseur (1) déconnectant ensuite de nouveau le côté tension alternative du module convertisseur (1) du point de tension négative ou positive du circuit à tension continue (2).

3. Système convertisseur selon la revendication 1, **caractérisé en ce que** dans le cas d'un système convertisseur pour commuter trois niveaux de tension, le module de limitation de tension (4) présente deux circuits série comprenant chacun une résistance de limitation (R_{VLU}) et un commutateur de puissance commandable (S), **en ce que** le circuit de mise en court-circuit (3) présente deux résistances de mise en court-circuit (R_{CRB}) et **en ce que** chaque circuit série constitué de la résistance de limitation (R_{VLU}) et du commutateur de puissance commandable (S) est à chaque fois relié avec l'une des résistances de mise en court-circuit (R_{CRB}) .

4. Système convertisseur selon la revendication 3, **caractérisé en ce que** les résistances de mise en court-circuit (R_{CRB}) sont reliées entre elles.

5. Système convertisseur selon la revendication 2, **caractérisé en ce que** dans le cas d'un système convertisseur pour commuter deux niveaux de tension, le module de limitation de tension (4) présente un circuit série comprenant une résistance de limitation (R_{VLU}) et un commutateur de puissance commandable (S) et **en ce que** le circuit série constitué de la résistance de limitation (R_{VLU}) et du commutateur de puissance commandable (S) est relié avec la résistance de mise en court-circuit (R_{CRB}).

6. Procédé pour faire fonctionner un système convertisseur pour commuter au moins trois niveaux de tension, le système convertisseur présentant un module convertisseur (1) au côté tension continue duquel est relié un circuit à tension continue (2), lequel circuit à tension continue (2) présente un point neutre de tension (NP), et au côté tension alternative duquel est relié un circuit de mise en court-circuit (3), le circuit de mise en court-circuit (3) présentant une pluralité de thyristors et au moins deux résistances de mise en court-circuit (R_{CRB}),
procédé selon lequel le courant à travers le module convertisseur (1) est surveillé par rapport à une valeur de seuil et, en cas de dépassement de la valeur de seuil, les thyristors sont mis en circuit par application d'un signal de mise en circuit, de sorte que le côté tension alternative du module convertisseur (1) est relié avec les au moins deux résistances de mise en court-circuit (R_{CRB}),
**caractérisé en ce**
**qu'**un module de limitation de tension (4) destiné à limiter une surtension du circuit à tension continue (2) est relié avec le circuit à tension continue (2), le module de limitation de tension (4) est relié avec les au moins deux résistances de mise en court-circuit (R_{CRB}) et, après un franchissement vers le bas de la valeur de seuil du module convertisseur (1), le côté tension alternative du module convertisseur (1) commute au point neutre de tension (NP) du circuit à tension continue (2) et le signal de mise en circuit n'est plus appliqué, en ce que le module de limitation de tension (4) relie les au moins deux résistances de mise en court-circuit (R_{CRB}) pendant une durée réglable avec le circuit à tension continue (2) et en ce que le module convertisseur (1) déconnecte ensuite de nouveau le côté tension alternative du module convertisseur (1) du point neutre de tension (NP) du circuit à tension continue (2).

7. Procédé pour faire fonctionner un système convertisseur pour commuter deux niveaux de tension, le système convertisseur présentant un module convertisseur (1) au côté tension continue duquel est relié un circuit à tension continue (2) et au côté tension alternative duquel est relié un circuit de mise en court-circuit (3), le circuit de mise en court-circuit (3) présentant une pluralité de thyristors et une résistance de mise en court-circuit (R_{CRB}),
procédé selon lequel le courant à travers le module convertisseur (1) est surveillé par rapport à une valeur de seuil et, en cas de dépassement de la valeur de seuil, les thyristors sont mis en circuit par application d'un signal de mise en circuit, de sorte que le côté tension alternative du module convertisseur (1) est relié avec la résistance de mise en court-circuit (R_{CRB}),
**caractérisé en ce**
**qu'**un module de limitation de tension (4) destiné à limiter une surtension du circuit à tension continue (2) est relié avec le circuit à tension continue (2), le module de limitation de tension (4) est relié avec la résistance de mise en court-circuit (R_{CRB}) et, après un franchissement vers le bas de la valeur de seuil du module convertisseur (1), le côté tension alternative du module convertisseur (1) commute au point de tension négative ou positive du circuit à tension continue (2) et le signal de mise en circuit n'est plus appliqué,
en ce que le module de limitation de tension (4) relie la résistance de mise en court-circuit (R_{CRB}) pendant une durée réglable avec le circuit à tension continue (2) et
en ce que le module convertisseur (1) déconnecte ensuite de nouveau le côté tension alternative du module convertisseur (1) du point de tension négative ou positive du circuit à tension continue (2).

8. Procédé selon la revendication 6, **caractérisé en ce que** dans le cas d'un système convertisseur pour commuter trois niveaux de tension, le module de limitation de tension (4) présente deux circuits série comprenant chacun une résistance de limitation (R_{VLU}) et un commutateur de puissance commandable (S), le circuit de mise en court-circuit (3) présente deux résistances de mise en court-circuit (R_{CRB}), chaque circuit série constitué de la résistance de limitation (R_{VLU}) et du commutateur de puissance commandable (S) est à chaque fois relié avec l'une des résistances de mise en court-circuit (R_{CRB}), les résistances de mise en court-circuit (R_{CRB}) sont reliées entre elles et les commutateurs de puissance commandables (S) du module de limitation de tension (4) sont fermés pendant la durée réglable pour relier les deux résistances de mise en court-circuit (R_{CRB}) avec le circuit à tension continue (2).

9. Procédé selon la revendication 7, **caractérisé en ce que** le module de limitation de tension (4) présente un circuit série comprenant une résistance de limitation (R_{VLU}) et un commutateur de puissance commandable (S), le circuit série constitué de la résistance de limitation (R_{VLU}) et du commutateur de puissance commandable (S) est relié avec la résistance de mise en court-circuit (R_{CRB}) et le commutateur de puissance commandable (S) du module de limitation de tension (4) est fermé pendant la durée réglable pour relier la résistance de mise en court-circuit (R_{CRB}) avec le circuit à tension continue (2).
